# EUROPEAN PATENT APPLICATION

(11) **EP 2 916 565 A1**
(43) Date of publication of application: **09.09.2015**
(21) Application number: 13870844.1
(22) Date of filing: 18.03.2013
(51) Int. Cl.: H04R 5/00, H04B 7/00, F21V 33/00, F21Y 101/02

(54) **MULTI-FUNCTIONAL LED DEVICE AND MULTI-FUNCTIONAL LOUDSPEAKER BOX SYSTEM**

(30) Priority: 14.01.2013 CN 201310012799
(71) Applicant: Zhejiang Shenghui Lighting Co., Ltd, Jiaxing, Zhejiang 314015 (CN)
(72) Inventor: WANG, Xia, Jiaxing Zhejiang 314015 (CN); SUN, Chaoqun, Jiaxing Zhejiang 314015 (CN); SHEN, Jinxiang, Jiaxing Zhejiang 314015 (CN)
(74) Representative: Jöstingmeier, Martin
(86) International application number: PCT/CN2013/072797
(87) International publication number: WO 2014/107933

(57) **Abstract**

Embodiments consistent with the present disclosure provide a multifunctional LED device and a multifunctional speaker system. The multifunctional LED device includes a power supply unit configured to supply power; a control unit configured to process audio signals and controlling commands; a speaker configured to playback audio signals, an audio amplifier configured to drive the speaker, a wireless transceiver configured to receive and send data, and an LED lighting unit. Further, the wireless transceiver may communicate with remote smart terminals and other multifunctional LED devices. The multifunctional speaker system may include several multifunctional LED devices and a smart terminal. The smart terminal may communicate with all the multifunctional LED devices. The multifunctional LED devices may communicate with each other. Two of the multifunctional LED devices may form a 2.0-channel speaker system. Other speaker systems such as 2.1-channel, 5.1-channel, 7.1-channel, speaker systems etc., may also be realized by using more multifunctional LED devices. Embodiments consistent with the present disclosure are easy to install, require little wiring, and do not require adding a separate wireless transceiver, a separate remote, or a light switch. Embodiments consistent with the present disclosure support wireless lighting control and provide efficient indoor lighting.

## Description

### CROSS-REFERENCES TO RELATED APPLICATIONS

This application claims the priority of Chinese Patent Application No. 201310012799.1 (PCT/CN 103108453 A) filed on January 14, 2013, the entire content of which is incorporated herein by reference.

### FIELD OF THE DISCLOSURE

The present disclosure relates to the field of light emitting diode (LED) technologies and, more particularly, relates to a multifunctional LED device, and a multifunctional speaker system.

### BACKGROUND

Wireless technologies enable users to reduce the amount of wirings needed to set up equipment. Wireless technologies are widely used in modern electronics. LEDs provide controllable lighting and solid-state lighting. They consume less power than traditional lighting devices, and are environment friendly. Over time, LEDs have been widely used for various lighting applications such as public place lightings, office and indoor lightings, etc. Wireless control of LED lighting devices supports functions such as switching devices on/off, light adjustment, dimming devices, etc. Wireless control of LEDs is well received by consumers because it is convenient and easy to use.

Many traditional speaker systems reply on wired connections. These systems are large and often difficult to wire. Further, traditional speaker systems often need a separate wireless transmitter to send audio signals and to control the system. This type of system configurations may make the whole system large and expensive to install. As smartphones and other portable devices are widely used as controlling terminals, the traditional set-up for the speaker systems becomes out-of-date.

### BRIEF SUMMARY OF THE DISCLOSURE

Embodiments consistent with the present disclosure provide a multifunctional LED device and a multifunctional speaker system that are easy to wire. Such systems do not need to include a separate wireless transmitter base station or certain other peripherals such as a remote control unit or a light switch.

One aspect of the present disclosure provides a multifunctional LED device.

The multifunctional LED device includes an LED power supply unit configured to supply power to an LED lighting unit and drive the LED device; a wireless transceiver configured to receive and send audio signals and control signals to and from remote smart terminals, and send the received signals to other multifunctional LED devices; and a control unit configured to process audio signals and controlling commands and to control other components of the LED device.

The wireless transceiver sends the received signals to the control unit for further processing.

Further, the multifunctional LED device includes a speaker configured to playback audio signals; an audio amplifier configured to receive processed audio signals from the control unit and to drive the speaker; and an LED lighting unit configured to emit light.

The LED light unit receives control signals from the control unit and adjusts the light emission accordingly.

Moreover, the multifunctional LED device may include an audio codec unit configured to be connected to the control unit and the audio amplifier, to convert digital audio signals received from the control unit to analog signals, and to send the analog signals to the audio amplifier.

In addition, the control unit the multifunctional LED device may be a micro-controller, digital signal processor, or IC controller, or a combination thereof. The control unit may process audio signals.

The wireless transceiver of the multifunctional LED device may support 2.4 GHz, 5.2 GHz, 5.8 GHz, or a combination of the above working frequencies as well as bi-directional transmission.

Another aspect of the present disclosure provides a multifunctional sound system.

The sound system may include two multifunctional LED devices and a smart terminal configured to monitor and remotely control the multifunctional LED devices.

Further, one of the two multifunctional LED devices receives signals from the smart terminal and sends the received signals to the other multifunctional LED device.

The smart terminal may be a smartphone, a smart TV, a tablet, a desktop computer, or a wireless Dongle.

Embodiments consistent with the present disclosure provide a multifunctional LED device with audio broadcasting capacities. The multifunctional LED device may include a wireless transceiver that may communicate with a smart terminal and communicate with other multifunctional LED devices. Embodiments consistent with the present disclosure are small and inexpensive to install.

In addition, the multifunctional LED device consistent with the present disclosure may include a codec unit that may decode audio signals and provid the decoded signals for broadcasting.

The multifunctional LED devices consistent with the present disclosure may form a mesh, and/or star network. The network of the multifunctional LED devices may be connected to internet and local area network and to be controlled remotely by a smart terminal.

During operation, the power supply of the multifunctional LED device powers up the LED lighting unit and the multifunctional LED device. The smart terminal may send wireless audio signals and control signals to the wireless transceiver. The wireless transceiver may send the audio signals and control signals to the control unit. The control unit may process the received signals and send the processed signals to the wireless transceiver and/or the audio amplifier. The wireless transceiver may send the audio signals and control signals to other multifunctional LED devices. The control unit may send feedback signals to the smart terminal.

Embodiments consistent with the present disclosure are easy to install, require little wiring, do not require adding a wireless transceiver base station, a separate remote, or a light switch.

Embodiments consistent with the present disclosure support wireless lighting control and provide efficient lighting. Embodiments consistent with the present disclosure may be low cost, relatively small, and suitable for various lighting and audio applications in residential and commercial settings.

### BRIEF DESCRIPTION OF THE DRAWINGS

FIG. 1 is a block diagram of an exemplary multifunctional LED device consistent with various disclosed embodiments; and
FIG. 2 is a schematic diagram of an exemplary multifunctional speaker system consistent with various disclosed embodiments; and
FIG. 3 is another schematic diagram of an exemplary multifunctional speaker system consistent with various disclosed embodiments; and
FIG.4 is another block diagram of an exemplary multifunctional LED device consistent with various disclosed embodiments.

### DETAILED DESCRIPTION

Reference will now be made in detail to exemplary embodiments of the invention, which are illustrated in the accompanying drawings. Hereinafter, embodiments consistent with the disclosure will be described with reference to drawings. Wherever possible, the same reference numbers will be used throughout the drawings to refer to the same or like parts. It is apparent that the described embodiments are some but not all of the embodiments of the present invention. Based on the disclosed embodiment, persons of ordinary skill in the art may derive other embodiments consistent with the present disclosure, all of which are within the scope of the present invention.

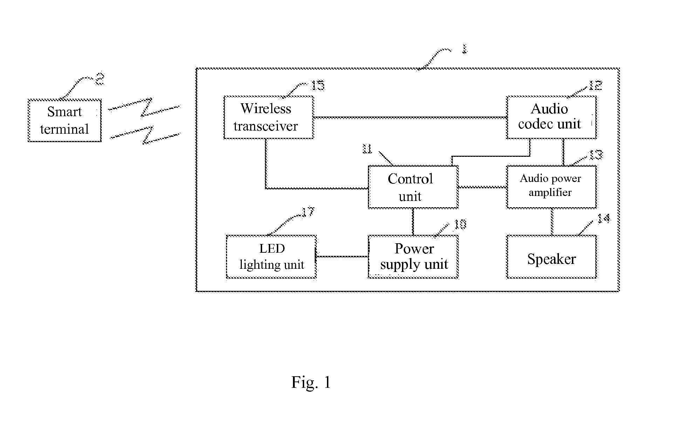

An exemplary embodiment consistent with the present disclosure is described below. FIG. 1 illustrates an exemplary configuration of a multifunctional LED device consistent with the present disclosure. The multifunctional LED device 1 may include a smart terminal 2, an LED power supply unit 10, a control unit 11, an audio codec unit 12, an audio amplifier 13, a speaker 14, a wireless transceiver15, and a LED lighting unit 17.

As shown in FIG. 1, the LED power supply unit 10 may drive the LED lighting unit 17 and supply power to the LED device 1.

The wireless transceiver15 may receive digital audio signals and controlling commands from the smart terminal 2. The wireless transceiver 15 may then send the received data to the control unit 11. The control unit 11 may process the digital audio signals, and may send the processed audio signals to the audio amplifier 13. The wireless transceiver 15 may also send the received digital audio signal and/or to the audio codec unit 12. The audio codec unit 12 may code/decode the received audio signals, and may send the processed audio to the audio amplifier 13 and/or to the wireless transceiver 15. The control unit 11 may send feedback information to the smart terminal 2 through the wireless transceiver 15. The wireless transceiver 15 may also forward the received data to other LED devices.

Further, the control unit 11 may process the received control commands and perform the controls accordingly. The control unit 11 may be a microprocessor, a digital processor, a digital integrated circuit, or a combination thereof. The wireless transceiver 15 may then send the received data to the control unit 11. The control unit 11 may process input digital audio signals and may send the processed audio signals to the audio amplifier 13. The wireless transceiver 15 may receive digital audio signals and controlling commands from the smart terminal 2 and send the received signals to the control unit 11. The audio amplifier 13 may be connected to the speaker 14. The control unit 11 may communicate with the wireless transceiver 15. The control unit 11 may also send data received from the wireless transceiver 15 to other LED devices.

In some embodiments, the wireless transceiver 15 may support 2.4 GHz, 5.2 GHz, 5.8 GHz, and other working frequencies or the combinations thereof. It may be capable of both receiving and sending data. It may be connected to the internet or a local area network to realize remote control of the multifunctional LED device 1.

The LED power supply unit 10 supplies the power for the LED lighting unit 17. In some embodiments, the control unit may be connected to the LED power supply unit 10. After receiving controlling commands, the control unit 11 may generate Pulse Width Modulation (PWM) waves. The control unit 11 may also generate PWM signals with a determined frequency and an adjustable wave width or PWM signals with a determined wave width but with adjustable frequency. These PWM waves may be sent to the power supply unit 10 to control the LED lighting unit 17.

Moreover, the smart terminal 2 can be a smartphone, a smart television, a tablet, a desktop computer, a wireless dongle, and/or other devices.

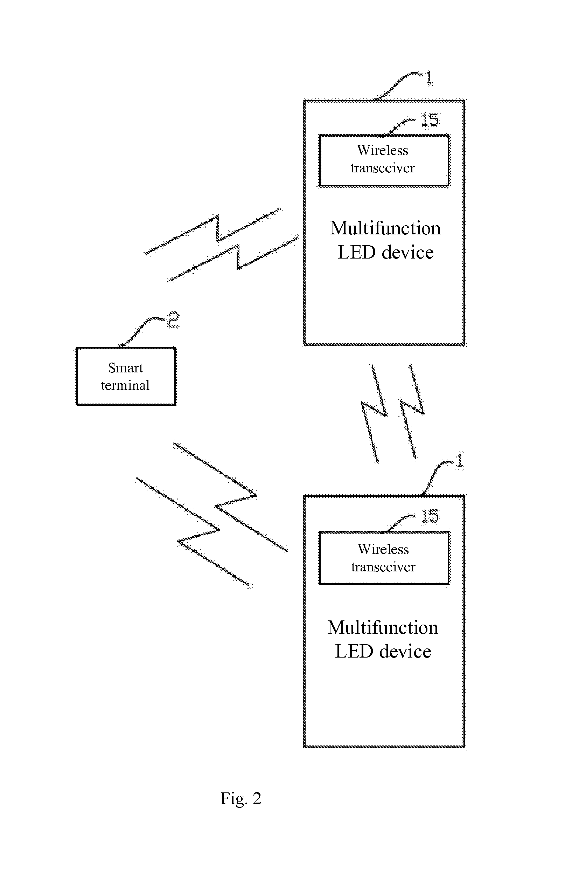

Figure 2 is an exemplary embodiment of a multifunctional speaker system consistent with present disclosure. The system may include several above mentioned multifunctional LED devices 1 and smart terminals 2. A smart terminal 2 may communicate with any of the multifunctional LED devices 1 in the system. In addition, the multifunctional LED devices 1 may communicate among themselves. As shown in FIG. 2, two multifunctional LED devices 1 may be configured to form a 2-channel speaker system. More multifunctional LED devices may be added to the system to form 2.1-channel, 5.1-channel, or 7.1-channel speaker systems. In theory, any number of audio channels in the wireless/speaker system may be realized through this method.

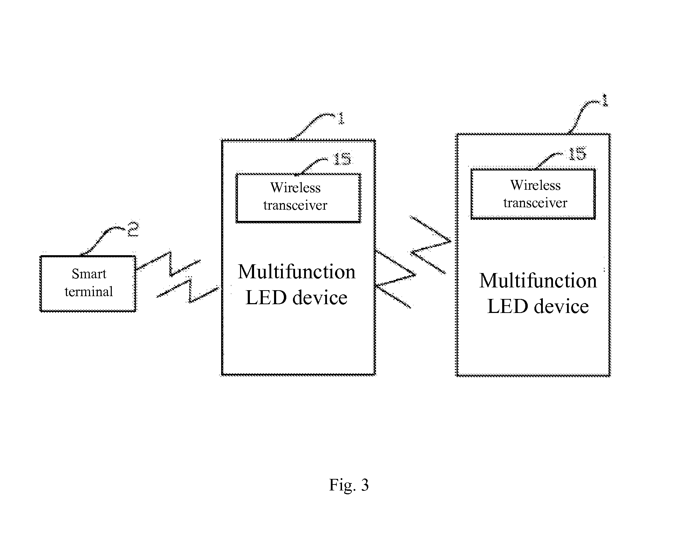

As shown in FIG. 3, in one embodiment, the multifunctional speaker system may set one of the multifunctional LED devices 1 as a central unit, and set the rest of the multifunctional LED devices as receiving units. The central unit may receive audio signals and controlling commands from the smart terminal 2, and then send the received information to other receiving units within its coverage.

In some embodiments, the smart terminal 2 may be the central control unit. The multifunctional LED devices may form star and/or mesh networks. The central control unit may control each of the devices in the network.

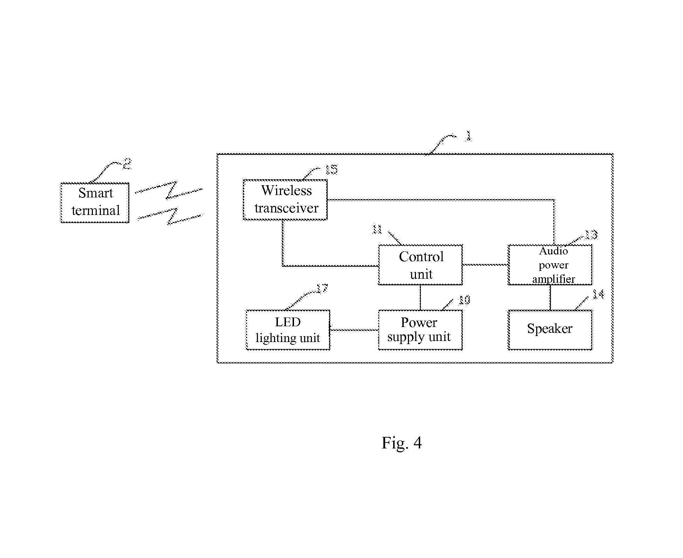

FIG. 4 shows another embodiment of the multifunctional LED device. In Figure 4, the audio codec unit is removed. After receiving audio signals and controlling commands from the wireless transceiver15, the control unit 11 may process the audio signals according to predefined algorithms. Then the processed audio signals may be sent to the audio amplifier 13 and/or may be send back the wireless transceiver1 5. The wireless transceiver15 may be connected to the audio amplifier 13. The audio amplifier 13 may be connected to the speaker unit 14.

## Claims

1. An multifunctional LED device, comprising:
an LED power supply unit configured to supply power to an LED lighting unit and drive the LED device;
a wireless transceiver configured to receive and send audio signals and control signals to and from remote smart terminals, and send the received signals to other multifunctional LED devices;
a control unit configured to process audio signals and controlling commands and to control other components of the LED device, wherein the wireless transceiver sends the received signals to the control unit for further processing;
a speaker configured to playback audio signals;
an audio amplifier configured to receive processed audio signals from the control unit and to drive the speaker; and
an LED lighting unit configured to emit light, wherein the LED light unit receives control signals from the control unit and adjusts the light emission accordingly.

2. The multifunctional LED device according to claim 1, further comprising:
an audio codec unit configured to be connected to the control unit and the audio amplifier, to convert digital audio signals received from the control unit to analog signals, and to send the analog signals to the audio amplifier.

3. The multifunctional LED device according to claim 1, wherein the control unit is a micro-controller, digital signal processor, or IC controller, or a combination thereof, and the control unit processes audio signals.

4. The multifunctional LED device according to claim 1, wherein the wireless transceiver supports 2.4 GHz, 5.2 GHz, 5.8 GHz, or a combination of these working frequencies and supports bi-directional transmission.

5. A multifunctional sound system, comprising:
two multifunctional LED devices as defined in claim 1; and
a smart terminal configured to monitor and remotely control the multifunctional LED devices;
wherein one of the two multifunctional LED devices receives signals from the smart terminal and sends the received signals to the other multifunctional LED device.

6. The multifunctional speaker system according to claim 5, wherein the smart terminal is a smartphone, a smart TV, a tablet, a desktop computer, or a wireless Dongle.
